(19)

Europäisches
Patentamt

European
Patent Office

Office européen
des brevets

(11) **EP 3 760 507 A1**

(12) **EUROPEAN PATENT APPLICATION**

(43) Date of publication:
**06.01.2021 Bulletin 2021/01**

(21) Application number: **20181704.6**

(22) Date of filing: **23.06.2020**

(51) Int Cl.:
**B60W 50/029** (2012.01)  **B60W 30/095** (2012.01)
**B60W 50/00** (2006.01)  **B60W 60/00** (2020.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.07.2019 EP 19184425**

(71) Applicant: **TTTech Auto AG
1040 Wien (AT)**

(72) Inventors:
• **POLEDNA, Stefan**
  **3400 Klosterneuburg (AT)**
• **Steiner, Wilfried**
  **1040 Wien (AT)**

(74) Representative: **Patentanwaltskanzlei
Matschnig & Forsthuber OG
Biberstraße 22
Postfach 36
1010 Wien (AT)**

(54) **SAFE TRAJECTORY SELECTION FOR AUTONOMOUS VEHICLES**

(57)      A method to select one trajectory, the so-called Selected Trajectory (ST), out of a set of trajectories (T1-T3) to be used by an autonomous or semi-autonomous ground vehicle (GV), characterized by the following steps:
• assessing said set of trajectories (T1-T3) with one, two, or a multitude of verification modules (VM1-VM4) and returning Quality Assessments (Q11-Q43) for each of the trajectories (T1-T3), and
• ranking said trajectories (T1-T3) with a Ranking Scheme (RS), wherein the Quality Assessments (Q11-Q43) are taken into account when ranking the trajectories (T1-T3), and
selecting exactly one trajectory, the Selected Trajectory (TR), based on the rank of the trajectories (T1-T3).

Fig. 2

EP 3 760 507 A1

# Description

Field of the invention

The invention relates to Method to select one trajectory, the so-called Selected Trajectory, out of a set of trajectories to be used by an autonomous or semi-autonomous ground vehicle.

Furthermore the invention relates to a Selected-Trajectory selecting-device for selecting one trajectory and to a Selected-Trajectory generating-device.

Finally, the invention relates to an autonomous or a semi-autonomous ground vehicle comprising a Selected-Trajectory selecting-device for selecting one trajectory and/or a Selected-Trajectory generating-device.

The invention relates to autonomously or semi-autonomously ground vehicles (abbreviated by the term vehicle), such as autonomous or semi-autonomous automobiles. Said vehicles operate in close proximity with other autonomous or non-autonomous vehicles in public infrastructures, such as highways, urban, or sub-urban settings. Said vehicles implement Trajectory Generators that generate trajectories along which trajectories the vehicle shall move. However, Trajectory Generators may become faulty and produce unsafe trajectories.

Unsafe trajectories are trajectories that are unsafe in a sense that the ground vehicle, if it was to move along said faulty trajectory, would cause harm to passengers within said vehicle or human beings outside said vehicle. For example, a trajectory that causes a crash of said vehicle with a stationary or moving object is considered an unsafe trajectory if it is reasonable to assume that the passengers inside the vehicle or human beings in the environment of said vehicle would become injured as a result of the crash.

Trajectories that are not unsafe are considered to be safe trajectories.

It is an objective of the invention to disclose a method and a device for Safe Trajectory Selection, that selects a trajectory, the so-called "Selected Trajectory" out of a set of trajectories generated by two or more Trajectory Generators, which can be used by a vehicle.

This object is achieved a method as mentioned above, wherein according to the invention said method is characterized by the following steps:

- assessing said set of trajectories with one, two, or a multitude of verification modules and returning Quality Assessments for each of the trajectories, and

- ranking said trajectories with a Ranking Scheme, wherein the Quality Assessments are taken into account when ranking the trajectories, and

- selecting exactly one trajectory, the Selected Trajectory, based on the rank of the trajectories.

According to the method the best ranked trajectory may be or selected as Selected Trajectory.

Under the assumption that a least one Trajectory Generator produces safe trajectories, said Selected Trajectory is a safe trajectory, even in situations when one, two, or more of the Trajectory Generators produce unsafe trajectories.

In the case that two or more Trajectory Generators produce safe trajectories, according to the invention, the best safe trajectory is chosen as Selected Trajectory.

The Safe Trajectory Selection is configured to apply a Trajectory Ranking Scheme to determine the best safe trajectory as the Selected Trajectory. The particularities of said Safe Trajectory Selection as disclosed in this application significantly improve the probability that the autonomous or semi-autonomous vehicle manoeuvres along a safe trajectory which is the best trajectory beyond the current state-of-the-art.

Preferably, two or more Trajectory Generators are provided, which usually are implemented in a vehicle. All Trajectory Generators are configured to produce safe trajectories. However, due to failures (e.g., design failures, software failures, random hardware failures, etc.) one, two, or many Trajectory Generators may fail and as a result of this failure produce unsafe trajectories. The Safety Trajectory Selection according to the invention implements Verification Modules as well as a Decision Maker in order to select a Selected Trajectory from the trajectories generated by the Trajectory Generators, wherein the Selected Trajectory is the best trajectory with respect to a configured Ranking Scheme and preferably is safe.

As mentioned above, it may be provided that the set of trajectories is generated by two or more Trajectory Generators, wherein preferably each Trajectory Generator of the two or more Trajectory Generators generates one or more of the trajectories of the set of trajectories independently from the other Trajectory Generators.

One, two or more of the trajectory generators may fail and produce unsafe trajectories. However, using two or preferably more trajectory generators enhances the probability that at least one trajectory generator produces safe trajectories, so that the best trajectory with respect to the Ranking scheme is a safe trajectory.

It may be provided that all Trajectory Generators are diverse, in particular in that each of the Trajectory Generators uses different algorithms for generating trajectories then the other Trajectory Generators and/or each Trajectory Generator is implemented on different hardware.

In this case it can be possible to identify Trajectory Generators and/or algorithms which produce, in particular in specific situations, "better" trajectories and Trajectory Generators which produce "less good" or even unsafe trajectories, and to use this information about the Trajectory Generators and/or algorithms as additional input (see also below) for ranking the trajectories according to the Ranking Scheme.

The Verification Modules analyse the trajectories generated by the Trajectory Generators with respect to various properties. Examples of Verification Modules (the checks which said modules may execute) are: analysis whether the probability of collision with an obstacle is sufficiently low, an analysis whether the trajectory is drivable by the vehicle according to the vehicle dynamics, or an analysis whether the trajectory is in line with legal regulations.

The Decision Maker takes the results of the Verification Modules as input and preferably takes additional inputs IN as well. Additional input IN is for example any one or an arbitrary combination of the following: the Vehicle State information (velocity and/or acceleration and/or direction and/or tire friction and/or steering angle), Map Data, Trajectory Generator Diagnostics, knowledge about the Automotive Safety Integrity Levels (ASIL) of the Trajectory Generators, knowledge about the Vehicle Environment. Based on said input the Decision Maker selects the Selected Trajectory based on its input and using a Ranking Scheme.

The vehicle uses the Selected Trajectory as selected by the Safe Trajectory Selection to determine its future movement.

Preferably, the method and the vehicle is configured to execute the procedure as outline above (trajectory generating, trajectory selection, trajectory execution) periodically. Typical periods of this process execution are from 1ms to 100ms, but may also be well below 1ms or well above 100ms.

Further advantages of the invention, which alone or in any arbitrary combination may be realised, are described in the following:

➤ A Decision Maker may be provided, which ranks the trajectories and/or selects the exactly one Selected Trajectory.

➤ For ranking, for example with the Decision Maker, other input for selecting the Selected Trajectory may be taken into account, for example in that the Decision Maker takes said other input into account when ranking the trajectories using the Ranking Scheme.

➤ Locally stored information may be taken into account when selecting the Selected Trajectory, for example in that the Decision Maker takes said locally stored information into account when ranking the trajectories using the Ranking Scheme.

➤ The Ranking Scheme may be static or the Ranking Scheme may be dynamic, for example in that it changes based on the input.

➤ Each verification module, for assessing the trajectories, may be adapted to execute at least one test on the trajectories, wherein the at least one test is one of the following tests:

- Collision Probability Test, CPT
- Vehicle Dynamics Test, VDT
- Vehicle Stability Test, VST
- Legality and Regulations Test, LRT
- Comfort and Convenience Test, CCT
- Energy Efficiency Test, EET
- User-defined Preferences Test, UPT.

Preferably, different verification modules execute different tests on the trajectories.

➤ The Ranking Scheme may distinguish between Safety-Relevant Verification Modules and Non-Safety-Relevant Verification Modules, wherein the Decision Maker by using the Ranking Scheme may select as Selected Trajectory a trajectory with the best safety rank.

➤ In the case that two or more trajectories have equal safety ranks, it may be provided that the Decision Maker selects by use of the Ranking Scheme out of said trajectories with equal safety rank a trajectory with the highest non-safety rank as Selected Trajectory.

➤ In the case that two or more trajectories have equal safety rank and equal non-safety rank, the Decision Maker may, by use of the Ranking Scheme and a Tie Breaker, select a Selected Trajectory.

➤ Said Tie Breaker may be

- an identifier of the Trajectory Generator of the respective Trajectory, or
- derived from locally stored information, or
- derived from other input.

A Selected-Trajectory selecting-device for selecting one trajectory, the so-called "Selected Trajectory" out of a set of trajectories, which Selected Trajectory is to be used by an autonomous or semi-autonomous ground vehicle, according to the invention comprises one, two, or a multitude of verification modules and a Decision Maker, wherein the Safety-Trajectory-selecting device is adapted to execute a method as described above.

A Selected-Trajectory generating-device according to the invention comprises

- two or more trajectory generators, which are adapted to generate a set of trajectories and

- a Selected-Trajectory-selecting device a mentioned above, for selecting one trajectory, the Selected Trajectory, out of the set of trajectories generated by the trajectory generators.

Preferably, each of the trajectory generators is adapted to generate one or more of the trajectories of the set of trajectories independently from the other Trajectory Generators. It may be provided that all Trajectory Generators are diverse, in particular in that each of the Trajectory Generators uses different algorithms for generating trajectories then the other Trajectory Generators and/or each Trajectory Generator is implemented on different hardware then the other Trajectory Generators.

Brief Description of the Figures

In the following, in order to further demonstrate the present invention, illustrative and non restricting embodiments are discussed, as shown in the drawings, which show:

Fig. 1    an example of a vehicle implementing a Selected-Trajectory selecting-device, and

Fig. 2    an example of an inner structure of a Selected-Trajectory selecting-device.

We discuss some of the many implementations of the invention next. If not stated otherwise, all details described in connection with a specific example are not only valid in connection with this example, but apply to the general scope of protection of the invention.

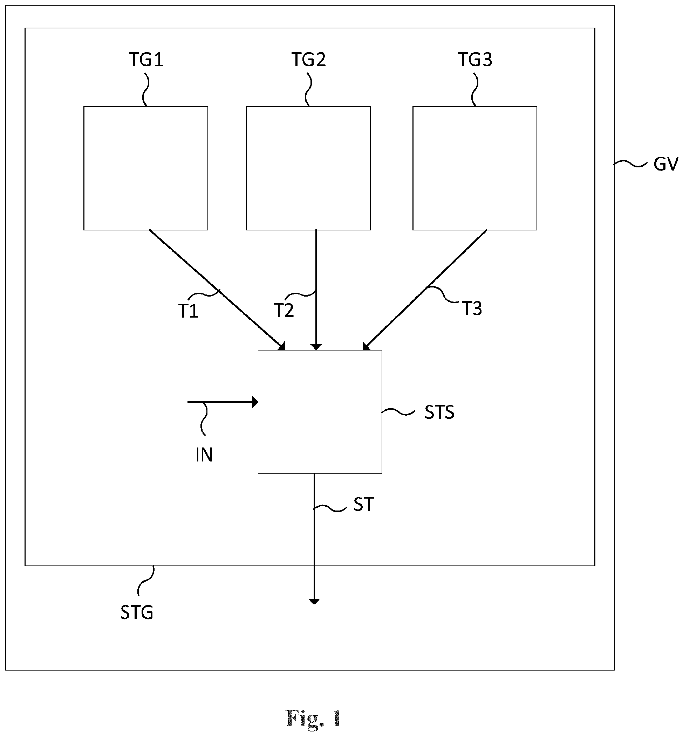

Fig. 1 depicts an example of an autonomous or semi-autonomous ground vehicle GV implementing three Trajectory Generators TG and a Safe Trajectory Selection STS, which may be part of a Selected-Trajectory generating-device STG. The Trajectory Generators TG generate trajectories T1-T3. The Safe Trajectory Selection STS selects a trajectory as Selected Trajectory ST. This Selected Trajectory ST is safe and the best trajectory with respect to a Ranking Scheme RS. The Selected Trajectory ST is used by the vehicle GV to manoeuvre, for example on a highway, or in urban or suburban environment.

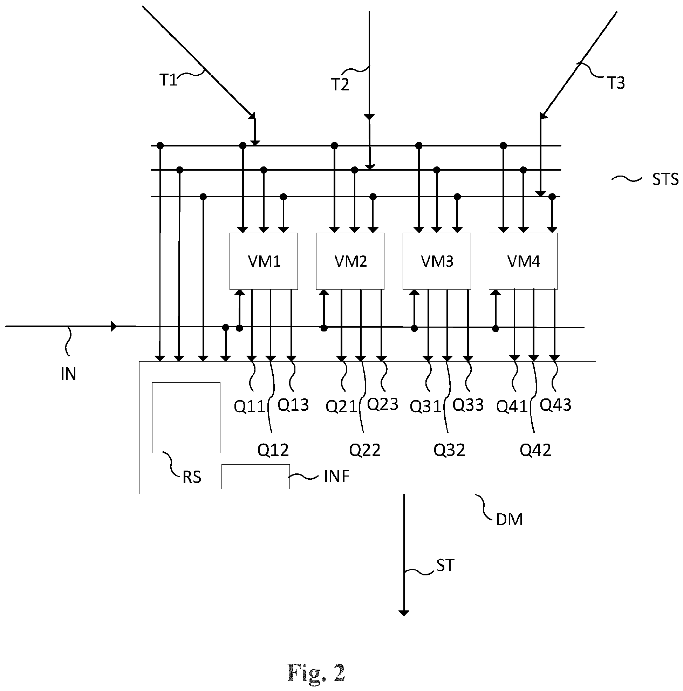

Fig. 2 depicts an example of an inner structure of a Safe Trajectory Selection STS. The Safe Trajectory Selection STS receives as an input trajectories, for examples the trajectories T1-T3 from the Trajectory Generators TG1-TG3 according to Fig. 1, and preferably other inputs IN, as for example:

- Vehicle State information (velocity and/or acceleration and/or direction and/or tire friction and/or steering angle, etc.), and/or

- Map Data, and/or
- Trajectory Generator Diagnostics.

Furthermore, the Safe Trajectory Selection STS may have locally stored Information INF as well, as for example information about the Automotive Safety Integrity Level (ASIL) of the respective Trajectory Generators TG1-TG3, and/or diagnostics data on the operational history of the Trajectory Generators TG1-TG3, and/or other information, which may be used for selecting the Selected Trajectory ST.
The Safe Trajectory Selection STS further implements one or more Verification Modules, in this example four Verification Modules VM1-VM4. The Verification Modules VM1-VM4 are configured to implement tests on the trajectories T1-T3. Said tests on said trajectories T1-T3 return Quality Assessments Q11-Q43, wherein said Quality Assessments Q11-Q43 are indicating the quality of each of the trajectories T1-T3 in terms of said tests.
Preferably, each Verification Module implements a different test on one, two or preferably all trajectories.
For example,

- Verification Module VM1 implements a test that is executed on each trajectory T1-T3 and said test executed in VM1 returns for each trajectory a Quality Assessment, Quality Assessment Q11 for trajectory T1, Quality Assessment Q12 for trajectory T2, and Quality Assessment Q13 for trajectory T3;

- Verification Module VM2 implements a test that is executed on each trajectory T1-T3 and said test executed in VM2 returns for each trajectory a Quality Assessment, Quality Assessment Q21 for trajectory T1, Quality Assessment Q22 for trajectory T2, and Quality Assessment Q23 for trajectory T3;

- Verification Module VM3 implements a test that is executed on each trajectory T1-T3 and said test executed in VM3 returns for each trajectory a Quality Assessment, Quality Assessment Q31 for trajectory T1, Quality Assessment Q32 for trajectory T2, and Quality Assessment Q33 for trajectory T3;

- Verification Module VM4 implements a test that is executed on each trajectory T1-T3 and said test executed in VM4 returns for each trajectory a Quality Assessment, Quality Assessment Q41 for trajectory T1, Quality Assessment Q42 for trajectory T2, and Quality Assessment Q43 for trajectory T3.

The Safe Trajectory Selection STS selects a trajectory as Selected Trajectory ST from the trajectories T1-T3 generated by the Trajectory Generators TG1-TG3. In general, each Trajectory Generator generates one or more trajectories independently of the other Trajectory Generators. In the specific example, Trajectory generator TG1 generates trajectory T1, Trajectory generator TG2 generates trajectory T2, and Trajectory generator TG3 generates trajectory T3.

The selection is executed in a Decision Maker DM. The Decision Maker DM uses the Quality Assessments as returned by the tests in the Verification Modules VM1-VM4, and optionally other input IN (as described above), as well as optionally locally stored information INF for the purpose of selecting of the one Selected Trajectory ST. For this selection process, the Decision Maker DM encodes a Ranking Scheme RS according which the Decision Maker DM ranks the trajectories T1-T3. Thus, this Ranking Scheme RS uniquely identifies the best safe trajectory out of the set of trajectories T1-T3.

The Safe Trajectory Selection STS returns said best trajectory as output as Selected Trajectory ST. Said Selected Trajectory ST is typically a safe trajectory or the best safe trajectory under the assumptions mentioned in the beginning.

Example tests of Verification Modules VM1-VM4 are as follows:

- Collision Probability Test CPT: the test assesses the likelihood that the vehicle GV would collide with an obstacle when maneuvering along the trajectory T1-T3 under test.

- Vehicle Dynamics Test VDT: the test assesses how accurately the vehicle GV can follow the trajectory T1-T3 under test.

- Vehicle Stability Test VST: the test assesses the likelihood that the vehicle GV becomes unstable from a control theory perspective when following the trajectory T1-T3 under test.

- Legality and Regulations Test LRT: the test assesses the likelihood that the vehicle GV adheres to configured legal rules (e.g., maximum speeds, minimum distance to other vehicles, behaving in accordance with street signs) when following the trajectory T1-T3 under test.

- Comfort and Convenience Test CCT: the test assesses how comfortable the movement of the vehicle GV appears to a passenger when said vehicle GV follows the trajectory T1-T3 under test.

- Energy Efficiency Test EET: the test assesses the energy efficiency of the vehicle GV moving along the trajectory T1-T3 under test.

- User-defined Preferences Test UPT: the test assesses whether the vehicle GV adheres to user-defined restrictions (e.g., maximum speed limits preferences set by a user, maximum acceleration preference set by a user, other preferences)

In the following we give some example embodiments of Ranking Schemes RS. The Verification Modules VM1-VM4 are preferably of different criticality. For example the Verification Module implementing a Collision Probability Test CPT is more critical than the Verification Module that is configured to implement a Comfort and Convenience Test CCT, because a low Quality Assessment Q11-Q43 of a trajectory by the Collision Probability Test CPT means a high probability of collision of the vehicle GV with an obstacle, while a low Quality Assessment of a trajectory by the Comfort and Convenience Test CCT does not compromise the safety of vehicle passengers. Thus, in one embodiment the Ranking Scheme RS distinguishes between Safety-Relevant Verification Modules S-VM and Non-Safety-Relevant Verification Modules N-VM.

In one embodiment the Verification Modules VM1-VM4 are statically defined as Safety-Relevant Verification Modules S-VM and Non-Safety-Relevant Verification Modules N-VM for the duration of a complete mission of a vehicle GV.

In one embodiment the distribution of the Verification Modules VM1-VM4 into Safety-Relevant Verification Modules S-VM and Non-Safety-Relevant Verification Modules N-VM may change during the mission of a vehicle GV. It may be provided that said distribution changes during the mission of a vehicle GV depending on inputs IN that the Safe Trajectory Selection STS receives. Based on said inputs IN, the Safe Trajectory Selection STS may differentiate between driving scenarios, e.g., highway driving vs. parking vs. urban or suburban driving. Thus, the Safe Trajectory Selection STS may change the classification of the Verification Modules VM1-VM4 into Safety-Relevant Verification Modules S-VM and Non-Safety-Relevant Verification Modules N-V in response to changing driving scenarios.

It may be provided that the Safe Trajectory Selection STS normalizes the Quality Assessments Q11-Q43 to ranges, e.g. to a values $R_{ACT}$ in a range between a minimum value $R_{MIN}$ and a maximum value $R_{MAX}$.

It may be provided that the Safe Trajectory Selection STS normalizes two or more, preferably all Quality Assessments Q11-Q43 to the same range.

It may be provided that the Safe Trajectory Selection STS is configured to implement configurable weights $W_{ACT}$, within an interval of a minimum weights $W_{MIN}$ and maximum weights $W_{MAX}$, for Quality Assessments Q11-Q43. It may be provided that the interval of configurable weights $[W_{MIN}, W_{MAX}]$ is identical for two or more, in particular for all Quality Assessments Q11-Q43.

It may be provided that the configured weights $W_{ACT}$ are static for the duration of a complete mission of a vehicle GV.

It may be provided that the configured weights $W_{ACT}$ change during the mission of a vehicle GV. The configured weights $W_{ACT}$ may change during the mission of a vehicle GV depending of the inputs IN that the Safe Trajectory Selection STS receives. Based on the inputs IN, the Safe Trajectory Selection STS may differentiate between driving scenarios, e.g., highway driving vs. parking vs. urban or suburban driving. Thus, the Safe Trajectory Selection STS may change the configuration of the weights $W_{ACT}$ in response to changing driving scenarios.

The Ranking Scheme RS defines Ranking Procedures on how to calculate a Trajectory Rank TR1-TR3 for a respective Generated Trajectory T1-T3. The Safe Trajectory Selection STS selects the Trajectory T1-T3 with the best Trajectory Rank TR1-TR3 as the Selected Trajectory ST. In the following we discuss some examples of Ranking Procedures.

In one embodiment the Ranking Procedure RP is realized as follows:

- For each Trajectory T1-T3 the Ranking Scheme calculates a Safety Rank SR1-SR3. The Safety Rank SR1-SR3 may be calculated as follows (where $Qji$ represents the Quality Assessment of Trajectory $Ti$, of a Verification Module VMj that is classified as Safety-Relevant Verification Module S-VM):

$$SRi = Sum(W_{ACT} * Qji),$$

- For each Trajectory T1-T3 the Ranking Scheme calculates a Non-Safety Rank NR1-NR3. The Non-Safety Rank NR1-NR3 may be calculated as follows (where $Qki$ represents the Quality Assessment of Trajectory $Ti$, of a Verification Module VMk that is classified as Non-Safety-Relevant Verification Module N-VM):

$$NRi = Sum(W_{ACT} * Qki),$$

- The Safe Trajectory Selection STS is configured to select as Selected Trajectory ST the trajectory T1-T3 a Trajectory T1-T3 with the highest value of Safety Rank SR1-SR3. In case when there are more than one Trajectories T1-T3 with equal Safety Ranks SR1-SR3, the Safe Trajectory Selection STS is configured to select as Selected Trajectory ST out of the more than one Trajectories T1-T3 with highest Safety Rank SR1-SR3, the one or more Trajectories T1-T3 with highest Non-Safety Rank NR1-NR3. More than one Trajectories T1-T3 have equally highest Safety Ranks SR1-SR3 and equally highest Non-Safety Ranks NR1-NR3, then the Safe Trajectory Selection STS is configured to select out of said Trajectories T1-T3 with equally highest Safety Rank SR1-SR3 and equally highest Non-Safety Rank NR1-NR3, a Trajectory T1-T3 in accordance with a Tie Breaker TB.

This Tie Braker TB can be for example:

- the identifier of the Trajectory Generator TG1-TG3

of the respective Trajectory T1-T3;
- derived from locally stored information INF;
- derived from the other input IN to the Safe Trajectory Selection.

**Claims**

1. Method to select one trajectory, the so-called Selected Trajectory (ST), out of a set of trajectories (T1-T3) to be used by an autonomous or semi-autonomous ground vehicle (GV), **characterized by** the following steps:

   - assessing said set of trajectories (T1-T3) with one, two, or a multitude of verification modules (VM1-VM4) and returning Quality Assessments (Q11-Q43) for each of the trajectories (T1-T3), and
   - ranking said trajectories (T1-T3) with a Ranking Scheme (RS), wherein the Quality Assessments (Q11-Q43) are taken into account when ranking the trajectories (T1-T3), and
   - selecting exactly one trajectory, the Selected Trajectory (TR), based on the rank of the trajectories (T1-T3).

2. Method according to claim 1, wherein the set of trajectories (T1-T3) is generated by two or more Trajectory Generators (TG1, TG2, TG3), wherein preferably each Trajectory Generator of the two or more Trajectory Generators (TG1, TG2, TG3) generates one or more of the trajectories of the set of trajectories independently from the other Trajectory Generators.

3. Method according to any one of the preceding claims, wherein all Trajectory Generators are diverse, in particular in that each of the Trajectory Generators uses different algorithms for generating trajectories then the other Trajectory Generators and/or each Trajectory Generator is implemented on different hardware.

4. Method according to any one of the preceding claims, wherein a Decision Maker (DM) is provided, which ranks the trajectories (T1-T3) and/ or selects the exactly one Selected Trajectory (ST).

5. Method according to any one of the preceding claims, wherein for ranking, for example with the Decision Maker (DM), other input (IN) for selecting the Selected Trajectory (ST) is taken into account, for example in that the Decision Maker (DM) takes said other input into account when ranking the trajectories (T1-T3) using the Ranking Scheme (RS).

6. Method according to any one of the preceding claims, wherein locally stored information (INF) is taken into account when selecting the Selected Trajectory (ST), for example in that the Decision Maker takes said locally stored information (INF) into account when ranking the trajectories (T1-T3) using the Ranking Scheme (RS).

7. Method according to any one of the preceding claims, wherein the Ranking Scheme (RS) is static, or wherein the Ranking Scheme (RS) is dynamic, for example in that it changes based on the input (IN).

8. Method according to any one of the preceding claims, wherein each verification module (VM1-VM4), for assessing the trajectories (T1-T3), is adapted to execute at least one test on the trajectories, wherein the at least one test is one of the following tests:

   • Collision Probability Test, CPT
   • Vehicle Dynamics Test, VDT
   • Vehicle Stability Test, VST
   • Legality and Regulations Test, LRT
   • Comfort and Convenience Test, CCT
   • Energy Efficiency Test, EET
   • User-defined Preferences Test, UPT.

9. Method according to any one of the preceding claims, wherein the Ranking Scheme (RS) distinguishes between Safety-Relevant Verification Modules (S-VM) and Non-Safety-Relevant Verification Modules (N-VM), and wherein the Decision Maker (DM) by using the Ranking Scheme (RS) selects as Selected Trajectory (ST) a trajectory (T1-T3) with the best safety rank (SR1-SR3).

10. Method according to claim 9, wherein in the case that two or more trajectories (T1-T3) have equal safety ranks (SR1-SR3), the Decision Maker selects by use of the Ranking Scheme (RS) out of said trajectories with equal safety rank a trajectory with the highest non-safety rank (NR1-NR3), wherein preferably in the case that two or more trajectories (T1-T3) have equal safety rank (SR1-SR3) and equal non-safety rank (NR1-NR3), the Decision Maker (DM) by use of the Ranking Scheme (RS) and a Tie Breaker (TB) selects a Selected Trajectory (ST).

11. Method according to claim 10, wherein the Tie Breaker (TB) is

   • an identifier of the Trajectory Generator (TG1-TG3) of the respective Trajectory (T1-T3), or
   • derived from locally stored information (INF), or
   • derived from other input (IN).

12. Selected-Trajectory selecting-device (STS) for selecting one trajectory, the so-called "Selected Trajectory" out of a set of trajectories (T1-T3), which Selected Trajectory (TR) is to be used by an autonomous or semi-autonomous ground vehicle (GV), wherein the Safety-Trajectory-selecting device comprises one, two, or a multitude of verification modules (VM1-VM4) and a Decision Maker (DM), wherein the Safety-Trajectory-selecting device is adapted to execute a method according to any one of the claims 1 to 11.

13. Selected-Trajectory generating-device (STG), comprising

   • two or more trajectory generators (TG1, TG2, TG3), which are adapted to generate the set of trajectories (T1-T3) and
   • a Selected-Trajectory-selecting device (STS) according to claim 12, for selecting one trajectory, the Selected Trajectory (ST), out of the set of trajectories generated by the trajectory generators (TG1, TG2, TG3).

14. Selected-Trajectory generating-device (STG) according to claim 13, wherein each of the trajectory generators (TG1, TG2, TG3) is adapted to generate one or more of the trajectories of the set of trajectories independently from the other Trajectory Generators.

15. Selected-Trajectory generating-device (STG) according to claim 13 or 14, wherein all Trajectory Generators are diverse, in particular in that each of the Trajectory Generators uses different algorithms for generating trajectories then the other Trajectory Generators and/or each Trajectory Generator is implemented on different hardware.

16. Vehicle, in particular autonomous or semi-autonomous ground vehicle (GV), comprising a Selected-Trajectory selecting-device (STS) according to claim 12 or a Selected-Trajectory generating-device (STG) according to any one of the claims 13 to 15.

Fig. 1

Fig. 2

Europäisches
Patentamt

European
Patent Office

Office européen
des brevets

## EUROPEAN SEARCH REPORT

Application Number

EP 20 18 1704

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 285 163 A1 (FTS COMPUTERTECHNIK GMBH [AT]) 21 February 2018 (2018-02-21) * paragraphs [0014], [0024], [0026], [0034], [0036], [0037], [0040] - [0055]; figures 1-3 * | 1-16 | INV. B60W50/029 B60W30/095 B60W50/00 B60W60/00 |
| X | US 2018/267549 A1 (KOPETZ HERMANN [AT] ET AL) 20 September 2018 (2018-09-20) * paragraphs [0001], [0024] - [0027], [0037], [0041], [0053], [0056], [0064], [0067] - [0073], [0081] - [0086]; figure 1 * | 1,4-10, 12-16 | |
| X | DE 10 2015 209974 A1 (BAYERISCHE MOTOREN WERKE AG [DE]) 1 December 2016 (2016-12-01) * paragraphs [0002], [0005], [0017], [0018], [0024], [0033] - [0036], [0049], [0067] * | 1,4-10<br><br>11 | |
| A | | | |
| X | WO 2018/020129 A1 (INST VEDECOM [FR]) 1 February 2018 (2018-02-01) * page 7, line 28 - page 8, line 10 * * page 10, line 12 - page 12, line 17 * * abstract; figure 1 * | 1,4,8, 12-16 | TECHNICAL FIELDS SEARCHED (IPC) B60W |
| X | US 2019/176817 A1 (POLEDNA STEFAN [AT] ET AL) 13 June 2019 (2019-06-13) * paragraphs [0003], [0009], [0010], [0011] - [0015], [0031] - [0036], [0042], [0054] * | 1-3,8, 12-16 | |
| X | US 9 950 708 B1 (CULLINANE BRIAN [US] ET AL) 24 April 2018 (2018-04-24) * claims 1,6 * | 1,8,12, 16 | |

The present search report has been drawn up for all claims

| Place of search | Date of completion of the search | Examiner |
|---|---|---|
| Munich | 30 November 2020 | Elbel, Benedikte |

EPO FORM 1503 03.82 (P04C01)

## ANNEX TO THE EUROPEAN SEARCH REPORT
## ON EUROPEAN PATENT APPLICATION NO.

EP 20 18 1704

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2020

| Patent document cited in search report | | Publication date | Patent family member(s) | | Publication date |
|---|---|---|---|---|---|
| EP 3285163 | A1 | 21-02-2018 | AT 519165 A2 | | 15-04-2018 |
| | | | EP 3285163 A1 | | 21-02-2018 |
| | | | US 2018052453 A1 | | 22-02-2018 |
| US 2018267549 | A1 | 20-09-2018 | CN 108628692 A | | 09-10-2018 |
| | | | EP 3376390 A1 | | 19-09-2018 |
| | | | US 2018267549 A1 | | 20-09-2018 |
| DE 102015209974 | A1 | 01-12-2016 | NONE | | |
| WO 2018020129 | A1 | 01-02-2018 | CN 109690434 A | | 26-04-2019 |
| | | | EP 3491475 A1 | | 05-06-2019 |
| | | | FR 3054684 A1 | | 02-02-2018 |
| | | | JP 2019528518 A | | 10-10-2019 |
| | | | US 2020331495 A1 | | 22-10-2020 |
| | | | WO 2018020129 A1 | | 01-02-2018 |
| US 2019176817 | A1 | 13-06-2019 | CN 110032179 A | | 19-07-2019 |
| | | | EP 3495218 A1 | | 12-06-2019 |
| | | | US 2019176817 A1 | | 13-06-2019 |
| US 9950708 | B1 | 24-04-2018 | US 9950708 B1 | | 24-04-2018 |
| | | | US 2018364723 A1 | | 20-12-2018 |

EPO FORM P0459

For more details about this annex : see Official Journal of the European Patent Office, No. 12/82